# FASCICULE DE BREVET EUROPEEN

(11) **EP 1 325 856 B1**
(45) Date de publication et mention de la délivrance du brevet: **02.11.2005**
(21) Numéro de dépôt: 02356262.2
(22) Date de dépôt: 16.12.2002
(51) Int. Cl.: B62D 3/12, B62D 5/22

(54) **Direction à crémaillère de véhicule automobile**
Zahnstangenlenkung für Kraftfahrzeug
Rack pinion steering gear for automotive vehicle

(30) Priorité: 18.12.2001 FR 0116408
(43) Date de publication de la demande: 09.07.2003
(73) Titulaire: Société de Mécanique d'Irigny, 69540 Irigny (FR)
(72) Inventeur: Guillard, Grégory, 69500 Bron (FR); Gambert, Rémy, 69390 Charly (FR)
(74) Mandataire: Bratel, Gérard

(56) Documents cités:
- DE-A- 4 441 781
- FR-A- 2 737 176
- FR-A- 2 792 273
- US-A- 3 753 375
- US-A- 3 927 576
- PATENT ABSTRACTS OF JAPAN vol. 018, no. 348 (M-1630), 30 juin 1994 (1994-06-30) -& JP 06 087457 A (KOYO SEIKO CO LTD), 29 mars 1994 (1994-03-29)

## Description

La présente invention concerne, de façon générale, les systèmes de direction pour véhicules automobiles. Elle se rapporte, plus particulièrement, aux directions à crémaillère, comprenant un pignon de direction venant en prise avec la crémaillère, une "queue de pignon" prolongeant ce pignon vers l'extérieur, et un arbre d'entrée du mouvement, lui-même lié à une colonne de direction. Encore plus spécialement, l'invention s'intéresse à un dispositif qui, pour ce genre de direction, assure un équilibrage entre les pressions d'air à l'intérieur de la direction et à l'extérieur de celle-ci. Cette invention s'applique notamment, mais non exclusivement, à une direction à crémaillère manuelle.

Une direction à crémaillère de véhicule automobile est habituellement réalisée de façon totalement étanche, afin d'éviter toute entrée indésirable d'eau ou d'humidité, ou d'autres éléments extérieurs, à l'intérieur de la direction.

Ceci pose toutefois des problèmes de surpression ou de dépression dans la direction, en fonction de l'augmentation ou de la baisse de température environnante, la surpression ou dépression entraînant une déformation exagérée des soufflets de la direction, situés autour des extrémités de la crémaillère, avec pour conséquence une détérioration ou une destruction de ces soufflets. En particulier, des changements brutaux de la température ambiante peuvent avoir des effets désastreux sur les soufflets, et pour éviter ces effets, il convient de faire "respirer" la direction, c'est-à-dire de créer une circulation d'air entre l'intérieur de la direction et l'extérieur de celle-ci.

Dans ce but, il a été déjà envisagé de réaliser des directions avec soufflets "respirants", qui permettent une entrée ou une sortie d'air. Toutefois, cette solution nécessite une fabrication spéciale, donc complexe et coûteuse, des soufflets eux-mêmes. Il est fait référence, à ce sujet, aux documents US 3927576 A et FR 2792273 A.

La présente invention a pour but de fournir une direction à crémaillère avec dispositif d'équilibrage des pressions entre l'intérieur et l'extérieur de la direction, en vue d'éviter la déformation et la détérioration des soufflets, ce dispositif étant obtenu par une adaptation particulièrement simple et économique d'un organe mécanique de la direction.

A cet effet, l'invention a pour objet une direction à crémaillère de véhicule automobile, comprenant un pignon de direction en prise avec la crémaillère, et une "queue de pignon" prolongeant ce pignon vers l'extérieur, cette direction étant essentiellement caractérisée en ce qu'au moins un conduit de communication est ménagé dans le pignon de direction et/ou dans la "queue de pignon" prolongeant ce pignon, de manière à créer une communication autorisant une circulation de l'air entre l'intérieur de la direction et l'extérieur.

L'idée inventive consiste donc ici à ménager, dans le pignon de direction et/ou dans une partie solidaire de ce pignon (et dépassant à l'extérieur de la direction), un conduit qui fait communiquer l'intérieur de la direction avec l'extérieur. La direction à crémaillère est ainsi rendue "respirante", de manière simple, certaine et économique.

Selon une forme de réalisation de l'invention, le conduit de communication est ménagé principalement suivant l'axe du pignon de direction, ce conduit axial débouchant à l'extrémité extérieure de la "queue de pignon", et débouchant aussi, par au moins un perçage radial, à l'intérieur de la direction.

Dans une variante, le conduit de communication est ménagé suivant l'axe du pignon de direction, et il traverse de part et d'autre l'ensemble constitué par ce pignon et la "queue de pignon". On évite ainsi les éventuelles contraintes résultant d'un perçage radial.

Dans les réalisations les plus simples, le conduit de communication débouche librement à l'extérieur de la "queue de pignon".

Cependant, pour éviter toute entrée d'eau ou d'humidité dans la direction, notamment en cas de projection d'eau, le conduit de communication, ménagé dans le pignon de direction et/ou dans la "queue de pignon", peut recevoir un élément d'obturation réalisé, au moins partiellement, en une matière perméable à l'air mais hydrophobe.

Cet élément d'obturation peut, notamment, prendre la forme d'une pastille ou d'un tampon en une matière poreuse, perméable à l'air mais hydrophobe. Avantageusement, la pastille ou le tampon en matière poreuse est mis en place dans un élargissement du conduit de communication, prévu au niveau du débouché de ce conduit à l'extrémité extérieure de la "queue de pignon".

L'invention sera mieux comprise à l'aide de la description qui suit, en référence au dessin schématique annexé représentant, à titre d'exemple, une forme d'exécution de cette direction à crémaillère de véhicule automobile.
Figure 1 est une vue générale, extérieure, d'une direction à crémaillère conforme à l'invention;
Figure 2 est une vue partielle de la direction de figure 1, montrant le pignon de cette direction avec ses aménagements;
Figure 3 représente, à l'échelle agrandie, un détail de la "queue de pignon" de la direction de figure 2.

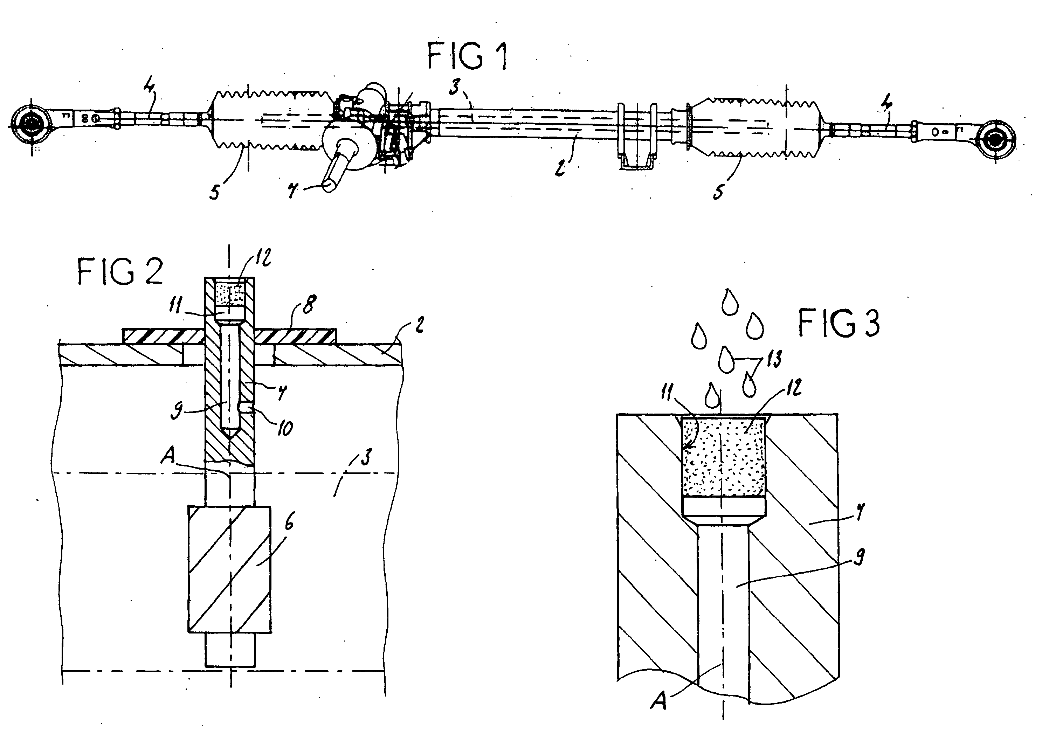

La figure 1 représente extérieurement une direction à crémaillère qui comprend un carter central tubulaire 2, dans lequel est montée coulissante une crémaillère 3. Les extrémités droite et gauche de la crémaillère 3, extérieures au carter 2, sont accouplées à des biellettes 4. Deux soufflets 5, raccordés respectivement aux deux extrémités du carter 2, recouvrent et protègent les zones d'extrémité de la crémaillère 3.

La crémaillère 3 est en prise avec un pignon de direction 6 (voir aussi figure 2), lui-même lié en rotation à une colonne de direction avec volant de conduite, non représentée.

Comme le montre la figure 2, le pignon de direction 6 proprement dit est prolongé axialement par une "queue de pignon" 7, laquelle traverse un joint à lèvre 8 qui assure l'étanchéité vis-à-vis du carter 2. Ainsi, la "queue de pignon" 7 est prolongée jusqu'à l'extérieur du carter 2.

Un alésage borgne 9 est percé dans la "queue de pignon" 7, suivant l'axe A du pignon de direction 6, à partir de l'extrémité extérieure de ladite "queue de pignon" 7. Un perçage radial 10, ménagé dans la "queue de pignon" 7, fait communiquer la région du fond de l'alésage axial 9 avec la surface latérale de cette "queue de pignon" 7.

Ainsi, l'alésage axial 9 complété par le perçage radial 10 constitue un conduit de communication, autorisant une circulation d'air entre l'intérieur et l'extérieur de la direction.

En se référant plus particulièrement à la figure 3, l'alésage axial 9 peut présenter, au niveau de son débouché à l'extrémité extérieure de la "queue de pignon" 7, un élargissement 11. Un tampon 12 est mis en place dans l'élargissement 11, le tampon 12 étant réalisé en une matière perméable à l'air mais hydrophobe, qui peut être une résine polymérique fluorée poreuse, telle que celle commercialisée sous la dénomination "PERMEON" (marque enregistrée), ou toute autre matière équivalente.

La direction est ainsi rendure "respirante", c'est-à-dire qu'une circulation d'air est rendue possible entre l'intérieur de la direction et l'extérieur, par le conduit de communication 9, 10, et en mettant aussi à profit la communication habituellement existante entre les deux soufflets 5, cette direction restant toutefois étanche à l'eau et aux particules solides grâce à au tampon 12 qui permet en particulier à cette direction de résister aux projections d'eau telles qu'indiquées en 13.

Dans le cas d'une direction à réaliser de façon particulièrement économique, et si l'extrémité de la "queue de pignon" 7 se trouve dans une zone protégée de l'humidité, le tampon 12 ou autre élément d'obturation équivalent peut être supprimé.

L'on ne s'éloignerait pas du cadre de l'invention, telle que définie dans les revendications annexées :
- en réalisant, à la place de l'alésage axial borgne 9, un alésage axial traversant, de part en part, le pignon de direction 6 et la "queue de pignon" 7, ce qui supprime le perçage radial 10;
- en remplaçant le tampon 12 par tout élément d'obturation équivalent, tel que pastille ou membrane en matière appropriée c'est-à-dire perméable à l'air mais hydrophobe, et pouvant être maintenue en place par tout moyen;
- en destinant le même dispositif de "respiration" à une direction à crémaillère de tout type, qu'il s'agisse d'une direction manuelle ou d'une direction assistée.

## Revendications

1. Direction à crémaillère de véhicule automobile, comprenant un pignon de direction (6) en prise avec la crémaillère (3), et une "queue de pignon" (7) prolongeant ce pignon (6) vers l'extérieur, **caractérisée en ce qu'**au moins un conduit de communication (9, 10) est ménagé dans le pignon de direction (6) et/ou dans la "queue de pignon" (7) prolongeant ce pignon (6), de manière à créer une communication autorisant une circulation de l'air entre l'intérieur et l'extérieur de la direction.

2. Direction à crémaillère selon la revendication 1, **caractérisée en ce que** le conduit de communication (9) est ménagé principalement suivant l'axe (A) du pignon de direction (6), ce conduit axial (9) débouchant à l'extrémité extérieure de la "queue de pignon" (7), et débouchant aussi, par au moins un perçage radial (10), à l'intérieur de la direction.

3. Direction à crémaillère selon la revendication 1, **caractérisée en ce que** le conduit de communication (9) est ménagé suivant l'axe (A) du pignon de direction (6), et traverse de part en part l'ensemble constitué par ce pignon de direction (6) et par la "queue de pignon" (7).

4. Direction à crémaillère selon la revendication 2 ou 3, **caractérisée en ce que** le conduit de communication (9, 10) débouche librement à l'extérieur, à l'extrémité extérieure de la "queue de pignon" (7).

5. Direction à crémaillère selon l'une quelconque des revendications 1 à 3, **caractérisée en ce que** le conduit de communication (9, 10), ménagé dans le pignon de direction (6) et/ou dans la "queue de pignon" (7), reçoit un élément d'obturation (12) réalisé, au moins partiellement, en une matière perméable à l'air mais hydrophobe.

6. Direction à crémaillère selon la revendication 5, **caractérisée en ce que** l'élément d'obturation est réalisé dans la forme d'une pastille ou d'un tampon (12) en matière poreuse, perméable à l'air mais hydrophobe.

7. Direction à crémaillère selon l'ensemble des revendications 2 et 6, ou 3 et 6, **caractérisée en ce que** la pastille ou le tampon (12) en matière poreuse est mis en place dans un élargissement (11) du conduit de communication (9), prévu au niveau du débouché de ce conduit (9) à l'extrémité extérieure de la "queue de pignon" (7).

## Patentansprüche

1. Zahnstangenlenkung für ein Kraftfahrzeug, mit einem Lenkungsritzel (6), das mit der Zahnstange (3) in Eingriff steht, und einem Ritzel-Endstück (7), welches das Ritzel (6) nach außen hin verlängert,
**dadurch gekennzeichnet,**
**daß** mindestens eine Verbindungsleitung (9, 10) derart in dem Lenkungsritzel (6) und/oder in dem das Ritzel (6) verlängernden Ritzel-Endstück (7) vorgesehen ist, daß eine Verbindung geschaffen wird, welche eine Zirkulation von Luft zwischen dem Inneren und dem Äußeren der Lenkung ermöglicht.

2. Zahnstangenlenkung nach Anspruch 1,
**dadurch gekennzeichnet,**
**daß** die Verbindungsleitung (9) im wesentlichen entlang der Achse (A) des Lenkungsritzels (6) vorgesehen ist, wobei diese axiale Leitung (9) am äußeren Ende des Ritzel-Endstücks (7) mündet und des weiteren über mindestens einen radialen Durchbruch (10) im Inneren der Lenkung mündet.

3. Zahnstangenlenkung nach Anspruch 1,
**dadurch gekennzeichnet,**
**daß** die Verbindungsleitung (9) entlang der Achse (A) des Lenkungsritzels (6) vorgesehen ist und die aus dem Lenkungsritzel (6) und dem Ritzel-Endstück (7) gebildete Einheit teilweise durchsetzt.

4. Zahnstangenlenkung nach Anspruch 2 oder 3,
**dadurch gekennzeichnet,**
**daß** die Verbindungsleitung (9, 10) an der Außenseite am äußeren Ende des Ritzel-Endstücks (7) frei mündet.

5. Zahnstangenlenkung nach einem der Ansprüche 1 bis 3,
**dadurch gekennzeichnet,**
**daß** die in dem Lenkungsritzel (6) und/oder in dem Ritzel-Endstück (7) vorgesehene Verbindungsleitung (9, 10) ein Verschlußelement (12) aufnimmt, das zumindest teilweise aus einem luftdurchlässigen, aber wasserabweisenden Material hergestellt ist.

6. Zahnstangenlenkung nach Anspruch 5,
**dadurch gekennzeichnet,**
**daß** das Verschlußelement (12) in Form eines Plättchens oder eines Stopfens aus einem luftdurchlässigen, aber wasserabweisenden porösen Material hergestellt ist.

7. Zahnstangenlenkung nach einer Kombination der Ansprüche 2 und 6 oder 3 und 6,
**dadurch gekennzeichnet,**
**daß** das Plättchen oder der Stopfen (12) aus einem porösen Material in einer Verbreiterung (11) der Verbindungsleitung (9) vorgesehen ist, welche auf der Höhe der Mündung der Leitung (9) am äußeren Ende des Ritzel-Endstücks (7) vorgesehen ist.

## Claims

1. Motor vehicle rack steering, comprising a steering pinion (6) in engagement with the rack (3), and a "pinion tail" (7) extending this pinion (6) outwards, **characterised in that** at least one communication conduit (9, 10) is provided in the steering pinion (6) and/or in the "pinion tail" (7) extending this pinion (6), so as to create communication allowing circulation of air between the inside and the outside of the steering.

2. Rack steering according to claim 1, **characterised in that** the communication conduit (9) is provided mainly along the axis (A) of the steering pinion (6), this axial conduit (9) emerging at the external end of the "pinion tail" (7), and also emerging through at least one radial drilling (10), inside the steering.

3. Rack steering according to claim 1, **characterised in that** the communication conduit (9) is provided along the axis (A) of the steering pinion (6) and passes through the assembly consisting of this steering pinion (5) and the "pinion tail" (7).

4. Rack steering according to claim 2 or 3, **characterised in that** the communication conduit (9, 10) emerges freely at the outside, at the external end of the "pinion tail" (7).

5. Rack steering according to any one of claims 1 to 3, **characterised in that** the communication conduit (9, 10) provided in the steering pinion (6) and/or in the "pinion tail" (7) receives a closure element (12) produced, at least partially, from a material permeable to air but hydrophobic.

6. Rack steering according to claim 5, **characterised in that** the closure element is produced in the form of a slug or plug (12) made from porous material, permeable to air but hydrophobic.

7. Rack steering according to claims 2 and 5 or 3 and 6 together, **characterised in that** the slug or plug (12) made from porous material is fitted in a broadening (11) of the communication conduit (9), provided at the outlet from this conduit (9) at the external end of the "pinion tail" (7).
